# EUROPEAN PATENT APPLICATION

(11) **EP 1 700 663 A2**
(43) Date of publication of application: **13.09.2006**
(21) Application number: 06251228.0
(22) Date of filing: 08.03.2006
(51) Int. Cl.: B23K 9/095, G05B 19/18

(54) **Welding method and welding equipment**

(30) Priority: 08.03.2005 JP 2005063701
(71) Applicant: Central Motor Wheel Co., Ltd., Anjo-shi, Aichi 446-0004 (JP); KAWASAKI JUKOGYO KABUSHIKI KAISHA, Kobe shi, Hyogo 650-8670 (JP)
(72) Inventor: Suzuki, Yukimitsu, Central Motor Wheel Co., Ltd., Anjo-shi Aichi 446-0004 (JP); Arita, Ichiro, Central Motor Wheel Co., Ltd., Anjo-shi Aichi 446-0004 (JP); Yamasumi, Satoru, Itami-shi Hyogo 664-0001 (JP); Iizuka, Takahisa, Noda-shi Chiba 278-0022 (JP); Onoue, Kazuhiko, Kobe-shi Hyogo 651-2146 (JP); Aoki, Atsuhito, Kobe-shi Hyogo 655-0885 (JP)
(74) Representative: Senior, Alan Murray

(57) **Abstract**

There is provided a weldingmethod and a welding equipment, in each of which it is possible to detect a weld abnormality, moreover it is possible to detect a generation position and a length of that abnormality, and further it is possible to perform a repair of a weld abnormality part. After a weld start signal has been inputted, a case where a welding current and a welding voltage, which have been detected by a welding current/voltage detection means, are outside set ranges is made the weld abnormality by an abnormality discrimination means. An abnormality generation time instant and an abnormality termination time instant are calculated with a start signal input timing being made a time axis reference by a time instant calculation means. An abnormality generation position and an abnormality terminus position are operated from data of the time instants and a robot position information by an operation means.

## Description

### BACKGROUND OF THE INVENTION

### FIELD OF THE INVENTION

This invention relates to a consumable electrode arc welding method and a consumable electrode arc welding equipment.

### DESCRIPTION OF THE RELATED ART

From the past, there is known a method of automatically performing an arc welding by using a welding robot or the like. In the automatic arc welding like this, there has been a welding equipment capable of detecting a weld abnormality (for example, refer to JP-A-8-267244 Gazette: Patent Document 1). That is, this welding equipment described in the Patent Document 1 is one which possesses means for detecting a welding current, and means for detecting a welding voltage, and in which a welding current value and a welding voltage value are detected at a weld implementation time and, in a case where the welding voltage is higher than a set voltage threshold value, there is discriminated whether the welding current exists within a set current range and, in a case where it is outside the set current range, a warning is emitted as the weld abnormality.

However, in the one described in the above Patent Document 1, even if it has been possible to detect the weld abnormality from welding current/voltage waveforms by an arc welding phenomenon instability, it is impossible to judge whether or not there has generated a length abnormality of what degree in which site. For this reason, notwithstanding the fact that a welded product is a weld defect product, it follows that the welded product is flowed out to a weld inspection process, so that a decrease in workability has been brought about.

### SUMMARY OF THE INVENTION

This invention is one having been made in order to solve the above drawbacks of the prior art, and its object exists in providing a welding method and a welding equipment, in each of which it is possible to detect the weld abnormality, moreover it is possible to detect a generation position and a length of that abnormality, and further it is possible to extemporaneously perform a repair of a weld abnormality part.

Whereupon, a welding method of this invention is characterized in that, after a weld start signal has been inputted, a case where at least any one of a welding current and a welding voltage is outside a set range is made a weld abnormality, an abnormality generation time instant and an abnormality termination time instant are calculated with a start signal input timing being made a time axis reference, and an abnormality generation position 11 and an abnormality terminus position 12 are operated from data of the time instants and a tool tip position information of a robot, thereby detecting the weld abnormality.

According to this welding method, it is possible to detect the weld abnormality in which the welding current or the welding voltage is outside the set range, and moreover it is possible to detect an abnormality generation position and an abnormality terminus position in its weld line. That is, it is possible to detect the generation position and the length of the abnormality and, on the basis of these generation position and length, it is possible to perform a repair work. For this reason, it becomes unnecessary that a work having a weld abnormality part is flowed to a work process (e.g., inspection process) after that, so that it is possible to contrive an improvement in workability.

Other welding method is characterized in that a welding current and a welding voltage are detected, a weld abnormality is detected on the basis of the welding current and the welding voltage, and an abnormality generation position 11 is operated from an abnormality generation time instant and an abnormality terminus position 12 is operated from an abnormality termination time instant, thereby performing a weld repair with a range larger than a range of this calculated weld abnormality part 13 being made a repair welding range.

According to this welding method, by operating the abnormality generation position from the abnormality generation time instant and operating the abnormality terminus position from the abnormality termination time instant, a weld correction is performed with the range larger than the range of this calculated weld abnormality part being made the repair welding range. For this reason, even in a case where, by an instability of a fluidity of a molten metal, the abnormality generation time instant and the abnormality generation position are different, since the weld correction is performed with the range larger than the range of the calculated weld abnormality part being made the repair welding range, it is possible to certainly repair that weld abnormality part.

Further, other welding method is characterized in that a welding current and a welding voltage are detected, a weld abnormality is detected on the basis of the welding current and the welding voltage, a degree of an abnormality is judged from data of the welding current and the welding voltage in a section of that abnormality, and weld repair conditions such as torch angle and aiming position are selected in compliance with the degree of the abnormality, thereby performing a weld repair by the weld repair conditions.

According to this welding method, since the degree of the abnormality is judged from the data of the welding current and the welding voltage in the section of that abnormality and it is possible to select the weld repair conditions such as torch angle and aiming position in compliance with this degree of the abnormality, it is possible to perform the repair of the weld abnormality part in compliance with the degree of the abnormality, so that it is possible to contrive an improvement in producibility.

Additionally, other welding method is characterized in that a welding current and a welding voltage are detected, when a weld abnormality time T1 of a weld abnormality part 13, in which at least any one of the welding current and the welding voltage is outside a set range, is longer than a 1st set time A, a section of that weld abnormality part 13 is weld-repaired, at a time when there are provided in juxtaposition the weld abnormality part 13 in which the weld abnormality time T1 is shorter than the 1st set time A and a site 14 in which the welding current and the welding voltage are within set ranges, when an inter-abnormality time T2 of the site 14 within the set ranges is shorter than a reference time B and a time T3 of a range α in which the weld abnormality part 13 and the site 14 continue exceeds a 2nd set time C, a weld repair is performed with this range α being made one continuous abnormality section.

According to this welding method, if the weld abnormality time is longer than the 1st set time, a length of the continuous weld abnormality part is long and it follows that this range is weld-repaired. Further, when the weld abnormality part and the site (site in which the welding current and the welding voltage are within the set ranges) are provided in juxtaposition, if the inter-abnormality time becomes longer than the reference time, since the generated weld abnormality part is short and moreover this weld abnormality part is solely generating, it is unnecessary to perform the weld repair. Additionally, even if the inter-abnormality time is shorter than the reference time, if the time of the range in which the weld abnormality part and the site continue is shorter than the 2nd set time, also in this range it is unnecessary to perform the weld repair. For this reason, it becomes unnecessary to weld-repair a range in which the weld repair may not be performed, so that it is possible to contrive an improvement in welding workability. And, even if the inter-abnormality time is shorter than the reference time, if the time of the range in which the weld abnormality part and the site continue exceeds the 2nd set time, the weld repair is performed with this range being made the one continuous abnormality section. By this, it is possible to prevent an omission of repair in a minute abnormality continuation generation section in which no repair is necessary from occurring, so that it is possible to achieve an increase in product quality.

A welding equipment of this invention is characterized by possessing a welding current/voltage detection means 1 for detecting a welding current and a welding voltage, an abnormality discrimination means 2 for discriminating a case where the welding current and the welding voltage are outside set ranges as a weld abnormality, a time instant calculation means 3 for calculating an abnormality generation time instant and an abnormality termination time instant of a weld abnormality part 13 having been discriminated by the abnormality discrimination means 2 with a start signal input timing being made a time axis reference, a robot position information collection means 7 for collecting torch tip position coordinate values of an arm 6 of a robot 5, and an operationmeans 8 for operating an abnormality generation position 11 and an abnormality terminus position 12 on the basis of a data of the time instant calculation means 3 and a data of the robot position information collection means 7.

According to this welding equipment, by the welding current/voltage detection means it is possible to detect the welding current and the welding voltage. Further, when the welding current and the welding voltage, which have been detected, are outside the set ranges, by the abnormality discrimination means it is possible to discriminate as the weld abnormality. And, by the time instant calculation means it is possible to calculate the abnormality generation time instant and the abnormality termination time instant of the weld abnormality part with the start signal input timing being made the time axis reference. Additionally, by the operation means it is possible to operate the abnormality generation position and the abnormality terminus position on the basis of the data of the time instant calculation means and the data of the robot position information collection means. That is, it is possible to detect the generation position and the length of the abnormality and, on the basis of these generation position and length, it is possible to perform the repair work. For this reason, it becomes unnecessary that the work having the weld abnormality part is flowed to the work process (e.g., inspection process) after that, so that it is possible to contrive the improvement in workability. Especially, since there is adapted such that, after one bead welding termination, there are extemporaneously judged a repair position, a repair section, repair conditions and the like to thereby repair-weld, it is possible to greatly reduce an outflow of a weld quality defect to a next process (weld inspection process). That is, even if the weld abnormality part generates, after this one bead welding termination it is possible to perform a repair (re-welding) by the robot (welding robot), a repair work of the weld defect product by a workman becomes unnecessary, and it becomes possible to ensure a stabilized weld quality.

### BRIEF DESCRIPTION OF THE DRAWINGS

FIG.1 is a simplified block diagram of an embodiment of a welding equipment of this invention;
FIG.2 is a simplified view of a robot in the above welding equipment;
FIG.3 is a simplified flowchart diagram of a welding method of this invention;
FIG.4 shows a weld abnormality generation situation at a welding time, and is a schematic diagram of a relation between a welding time and torch tip position coordinate values of a robot;
FIG.5 is flowchart diagram of the above welding method;
FIG.6 is a simplified view showing a weld state after a welding; and

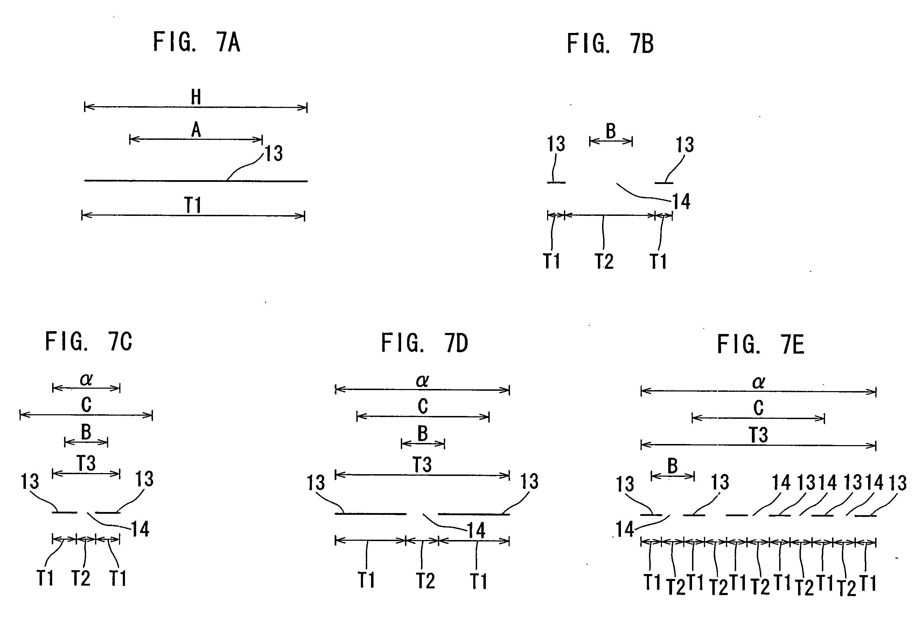

FIG.7 shows the weld states after the welding, wherein A is an image diagram in a case where a weld abnormality time is longer than a 1st set time, B is an image diagram in a case where an inter-abnormality time is longer than a reference time, C is an image diagram in a case where, the weld abnormality times have been connected, its connected time is shorter than a 2nd set time, D is an image diagram in a case where, the weld abnormality times have been connected, its connected time is longer than the 2nd set time, and E is an image diagram in a case where many weld abnormality parts and many sites within a set range are continuous.

### DETAILED DESCRIPTION OF THE INVENTION

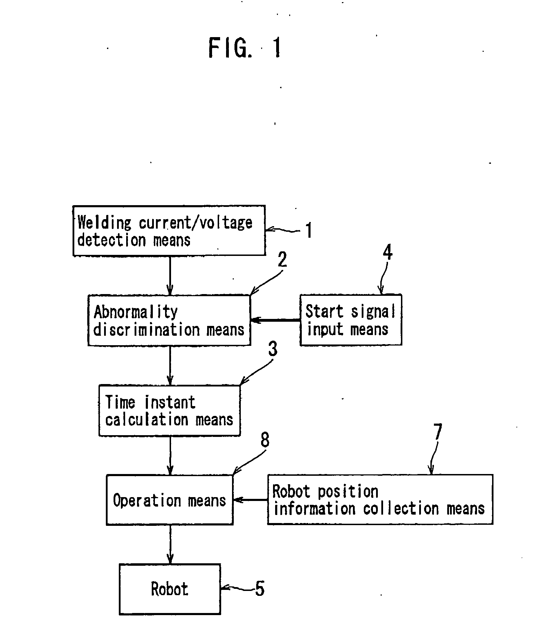

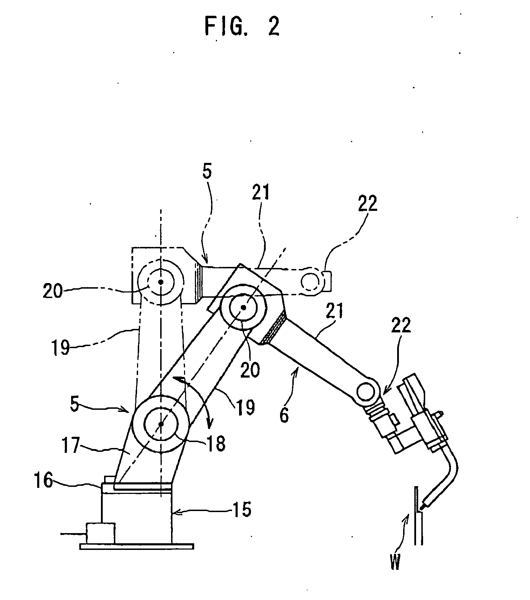

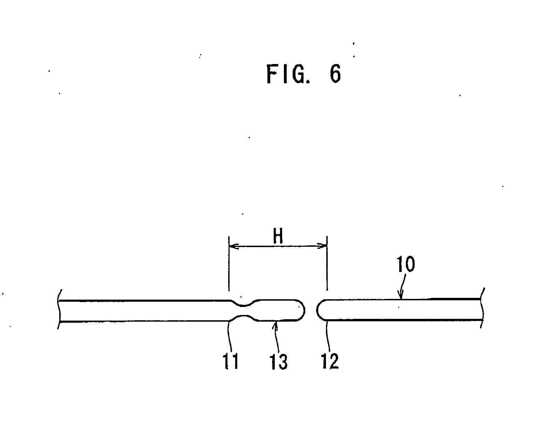

Next, about concrete embodiments of a welding method and a welding equipment of this invention, there are detailedly explained while referring to the drawings. FIG.1 is a simplified block diagram of the welding equipment (welding machine) of this invention. This welding equipment possesses the welding current/voltage detection means 1 for detecting the welding current and the welding voltage at a welding time, the abnormality discrimination means 2 for discriminating the case where the welding current and the welding voltage are outside set ranges, as the weld abnormality, the time instant calculation means 3 for calculating the abnormality generation time instant and the abnormality termination time instant of the weld abnormality part, a start signal input means (WCR signal input means) 4 for inputting a welding start signal (e.g., WCR signal) to the abnormality discrimination means 2, the robot position information collection means 7 for collecting the torch tip position coordinate values of the arm 6 (refer to FIG.2) of the robot 5, and the operation means 8 for operating the abnormality generation position 11 and the abnormality terminus position 12 (refer to FIG.6) on the basis of the data of the time instant calculation means 3 and the data of the robot position information collection means 7. Incidentally, the above WCR signal is one of the welding start signals.

Further, as shown in FIG.2, the arm 6 of the robot 5 possesses a 1st arm 17 continuously provided in a rotation axis 16 in a main body part 15 side, a 2nd arm 19 swingably connected to the 1st arm 17 through a 1st axis 18, a 3rd arm 21 swingably connected to the 2nd arm 19 through a 2nd axis 20, and a tip tool attachment part 22 connected to the 3rd arm 21. And, by moving the rotation axis 16, the 1st arm 17, the 2nd arm 19, the 3rd arm 21 and the tip tool attachment part 22, a tool (welding torch) having been attached to the tip tool attachment part 22 can be moved on coordinates of three axes (X axis, Y axis and Z axis) perpendicularly traversing each other. Incidentally, FIG.2 shows a state that the welding is being performed to a weldment (work) W by using the welding equipment.

By the way, the abnormality discrimination means 2 is one which, in a case where an input signal from the start signal input means (WCR signal input means) 4 is higher than a welding voltage threshold value and lower than a welding current threshold value after having been inputted, discriminates that range as the weld abnormality part. Further, if the weld abnormality part is discriminated by the abnormality discrimination means 2, by the time instant calculation means 3 it is possible to calculate the abnormality generation time instant and the abnormality termination time instant of the weld abnormality part with a start signal input timing being made a time axis reference. And, to the operation means 8 there are being inputted the torch tip position coordinate values (X coordinate value, Y coordinate value and Z coordinate value) of the arm 6 of the robot 5 from the robot position information collection means 7. These position coordinate values are position coordinate values with respect to a moving (welding) time of the torch tip at the welding time. For this reason, it follows that the operation means 8 operates the abnormality generation position 11 and the abnormality terminus position 12 on the basis of the data of the abnormality generation time instant and the abnormality termination time instant of the weld abnormality part from the time instant calculation means 3, and the data of the position coordinate values from the robot position information collection means 7.

Further, in a case where the weld abnormality has intermittently, continuously generated, if it is a minute, continuous abnormality whose abnormality generation interval is smaller than a predetermined interval, the abnormality discrimination means 2 can make this range into one continuous abnormality section (weld abnormality part 13). Additionally, as mentioned later, in the welding equipment, since it is possible to perform a weld repair work, at a time of this weld repair work it is possible to judge a degree of the abnormality from the data of the welding current and the welding voltage of that abnormality section, thereby selecting weld repair conditions such as torch angle and aiming position in compliance with this degree of the abnormality.

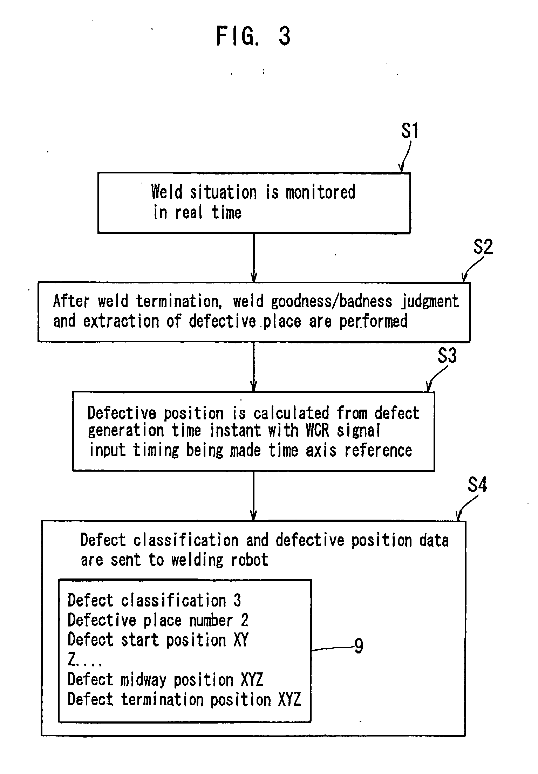

Next, there is explained a welding method in which the above welding equipment has been used. That is, like a step S1 in FIG.3, a monitoring of weld situations is performed in real time. Here, the weld situations are the welding current and the welding voltage by the welding current/voltage detection means 1, the torch tip position coordinate values of the robot 5 by the robot position information collection means 7, the start signal (WCR signal) by the WCR signal input means 4, and the like. Next, the process shifts to a step S2 and, after a weld termination, a weld goodness/badness judgment and an extraction of a defective place are performed on the basis of the above weld situations. The weld goodness/badness judgment judges, in the case where the welding current and the welding voltage are higher than the welding voltage threshold value and lower than the welding current threshold value as having been mentioned above, this range as "repairneed". Incidentally, in FIG.6, there is shown one example of the weld abnormality part 13 generating in a weld line 10 formed after the welding.

Thereafter, the process shifts to a step S3, and the defective position is calculated from a defect generation time instant with the start signal input timing (WCR signal input timing) being made the time axis reference. That is, the abnormality generation time instant and the abnormality termination time instant are calculated with the start signal input timing being made the time axis reference and, from the data of these and a robot position information, the abnormality generation part 11 and the abnormality terminus position 12 are operated as shown in FIG.6. On this occasion, a defect classification is previously detected on the basis of a weld abnormality time. Next, like a step S4, a data of the above defect classification and a defective position data are sent to the robot 5. By this, it follows that the weld repair of a site to be repaired is performed on the basis of these data. On this occasion, like a data collection 9 in FIG.3, the defect classification, a defective place number, a defect start position (abnormality generation position), a defect termination position (abnormality terminus position) and the like are sent to the robot 5. Incidentally, "3" of the defect classification or the like is one denoting a defect degree in the data collection 9.

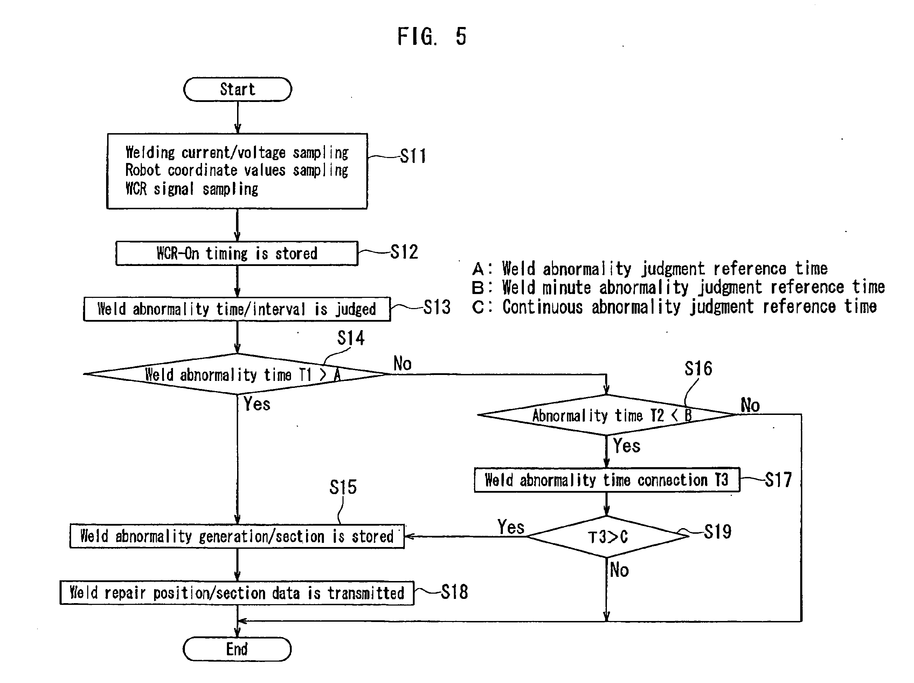

Additionally, about the above welding method, there is detailedly explained by using FIG.5. First, like a step S11, samplings of the welding current and the welding voltage are performed by the welding current/voltage detection means 1, samplings of the robot coordinate values by the robot position information collection means 7 are performed, and additionally a sampling of the WCR signal by the WCR signal input means 4 is performed. Next, like a step S12, a WCR-ON timing is stored to the operation means 8. Thereafter, the process shifts to a step S13, the data in the above step S11 is compared with the current threshold value and the voltage threshold value, which are set in the abnormality discrimination means 2, and, in the case where the welding current and the welding voltage are higher than the welding voltage threshold value and lower than the welding current threshold value (the welding current and the welding voltage are outside set ranges), that generation time is judged as an abnormality time and an interval in which the weld abnormality part 13 generates is judged. Next, the process shifts to a step S14, and it is judged whether or not the weld abnormality time is longer than the A. If the weld abnormality time > the A, there exists a state shown in FIG. 7A and the process shifts to a step S15 and, if the weld abnormality time ≦ the A, the process shifts to a step S16. Here, the A is the 1st set time, and is a weld abnormality judgment reference time. Incidentally, in FIG.7A and FIG. 6, H is a range in which the weld repair is performed as mentioned later, and corresponds to a range of the weld abnormality part 13.

In the step S15, a weld abnormality generation position/section is stored to the operation means 8. Further, in the step S16, it is judged whether or not the inter-abnormality time T2 is shorter than the B. Here, the inter-abnormality time T2 is a time between one weld abnormality part 13 and the other weld abnormality part 13, and is a time during which there is being generated a site 14 (refer to FIG.7 that is the image diagram) in which the welding current and the welding voltage are within the set ranges. The B is the reference time, and is a weld minute abnormality judgment reference time (weld abnormality part interval time). And, in the step S16, if the inter-abnormality time T2 < the B, the process shifts to a step S17. Further if the inter-abnormality time ≧ the B, since the interval (inter-abnormality time) between the weld abnormality parts 13 is large and the weld abnormality part 13 being generated is small, there exists a state shown in FIG.7B, so that it is judged as a sole generation of the minute abnormality and that the repair is unnecessary, thereby ending the step concerned. In the step S17, weld abnormality times are connected with the range α, in which the weld abnormality parts 13 and the site 14 continue, being made one continuous section. On this occasion, a time of this range α is made the T3 and, in FIG.7C for instance, there becomes T3 = (T1 + T2 + T1).

From the step S17, the process shifts to a step S19. In the step S19, there are compared the time T3 of the above range α and the 2nd set time C. This 2nd set time C is a continuous abnormality judgment reference time and, in this embodiment, has been set to the same as the above 1st set time A. If the T3 > the C, there becomes a state shown in FIG.7D or FIG.7E, and the process shifts to the step S15. Further, if the T3 ≦ the C, there exists a state shown in FIG.7C, and it is judged that the repair is unnecessary, thereby ending the step concerned. From the step S15, the process shifts to a step S18, and it follows that a weld repair position/section data is transmitted to the robot 5. By this, it is possible to perform the repair of the weld abnormality part 13.

That is, if the weld abnormality time T1 is longer than the 1st set time A, a length of the continuous weld abnormality part 13 is long and there exists the state shown in FIG.7A, it follows that this range H is weld-repaired. Further, as shown in FIG.7B, when the inter-abnormality time T2 (time of the site 14 within the set ranges of the welding current and the welding voltage) that exists between the weld abnormality times T1 and T1 is longer than the reference time B, since the generated weld abnormality part 13 is short and moreover this weld abnormality part 13 is solely generating, the weld repair is not performed. Additionally, if the inter-abnormality time T2 is shorter than the reference time B and, as shown in FIG.7C, the time T3 of the range α in which the weld abnormality parts 13 and the site 14 continue is shorter than the 2nd set time C, the weld repair of this range α is not performed. Further, even if the inter-abnormality time T2 is shorter than the reference time B, if the time T3 of the range α in which the weld abnormality parts 13 and the site 14 continue exceeds the 2nd set time C as shown in FIG.7D and FIG.7E, the weld repair is performed with this range α being made one continuous section. Incidentally, the range α in FIG.7D consists of the weld abnormality parts 13, 13 of one pair and the one site 14 provided between them, and is a minimum rage of a reference for judging whether or not the weld repair is necessary in a case where the weld abnormality parts 13 and the site 14 have been alternately provided in juxtaposition. In regard to this, FIG. 7E shows the range in a case where the many weld abnormality parts 13 and the many sites 14 continue. Like this, the range α in which the weld repair is performed or not performed consists of the weld abnormality parts 13, 13 of one pair and the one site 14 at least like FIG.7D, and the number of the weld abnormality part 13 and the site 14 becomes arbitrary.

Further, in the above welding method, since the weld abnormality time is calculated and the degree of the abnormality is judged from this abnormality time to thereby select the weld repair conditions such as torch angle and aiming position in compliance with this degree of the abnormality, it is possible to adapt so as to perform the weld repair under these weld repair conditions. By the way, when performing the weld repair work, if a threshold value in the weld abnormality time is set and the weld abnormality time is shorter than this threshold value, it may be adapted such that it is judged to perform the weld repair work and, when the threshold value has been exceeded, it is judged that the repair cannot be performed by this weld repair work. That is, in the weld abnormality, there is a case of a weld repair impossibility such as melt down defect and perforation defect by excessive heat input. For this reason, it is desirable that from the above weld situations it is judged whether or not the weld repair is possible and, if the weld repair is possible, there is made so as to perform the repair work and, if it is judged that the weld repair is impossible, there is made so as to carry out a weld defect product to a chute or the like.

Additionally, in a case where the abnormality generation position is operated from the abnormality generation time instant, there is a case where this operated abnormality generation position deviates from an actual abnormality generation position by the instability of the fluidity of the moltenmetal. For this reason, when performing the repair work, it is desirable to repair a range which is larger than the range of this detected weld abnormality part 13. That is, it follows that there is repaired a range in a downstream side than the abnormality terminus position 12 from an upstream side than the abnormality generation position 11, and it follows that a repair start teaching position and a repair terminus teaching position on the occasion of the repair work are corrected in a front/rear direction (upstream/downstream direction) of the weld line 10.

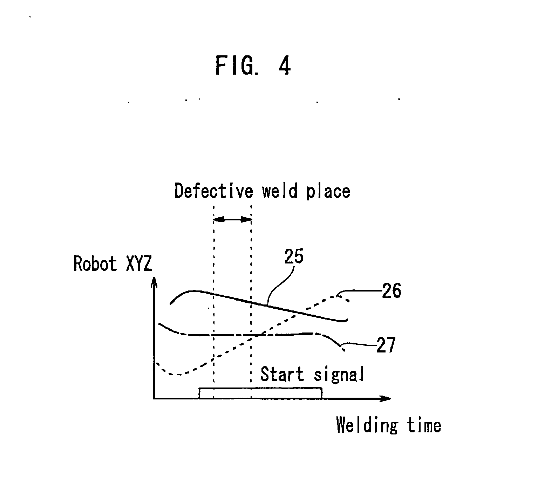

By the way, in a welding operation having used the above welding equipment, a relation between the welding time and robot XYZ coordinate axes becomes as shown in FIG.4. Incidentally, in FIG. 4, a graph 25 denotes a displacement in an X axis direction, a graph 26 denotes that in a Y axis direction, and a graph 27 denotes that in a Z axis direction. Further, a defective weld place in FIG.4 is the weld abnormality part 13.

If the welding by using the above welding equipment is performed, by the welding current/voltage detection means 1 it is possible to detect the welding current and the welding voltage, and further by the abnormality discrimination means 2 it is possible to discriminate as the weld abnormality when the welding current and the welding voltage, which have been detected, are outside the set ranges. And, by the time instant calculation means 3 it is possible to calculate the abnormality generation time instant and the abnormality termination time instant of the weld abnormality part13 with the start signal input timing being made the time axis reference, and additionally by the operationmeans 8 it is possible to operate the abnormality generation position 11 and the abnormality terminus position 12 on the basis of the data of the time instant calculation means 3 and the data of the robot position information collection means 7. That is, it is possible to detect the generation position and the length of the abnormality and, on the basis of these generation position and length, it is possible to perform the repair work. For this reason, it becomes unnecessary that the work W having the weld abnormality part is flowed to the work process (e.g., inspection process) after that, so that it is possible to contrive the improvement in workability.

Further, by operating the abnormality generation position 11 from the abnormality generation time instant and operating the abnormality terminus position 12 from the abnormality termination time instant, it follows that the weld correction is performed with the range larger than the range of this calculated weld abnormality part 13 being made the repair welding range. For this reason, even in the case where, by the instability of the fluidity of the molten metal, the abnormality generation time instant and the abnormality generation position 11 are different, since the weld correction is performed with the range larger than the range of the calculated weld abnormality part 13 being made the repair welding range, it is possible to certainly repair that weld abnormality part 13.

Additionally, since the degree of the abnormality is judged from the weld abnormality time and it is possible to select the weld repair conditions such as torch angle and aiming position in compliance with this degree of the abnormality, it is possible to perform the repair of the weld abnormality part 13 in compliance with the degree of the abnormality, so that it is possible to contrive the improvement in productivity. Further, if the weld abnormality time T1 is longer than the 1st set time A, the length of the continuous weld abnormality part 13 is long and it follows that this range is weld-repaired. And, when the weld abnormality part 13 and the site 14 (site in which the welding current and the welding voltage are within the set ranges) are provided in juxtaposition, if the inter-abnormality time T2 becomes longer than the reference time B, since the generated weld abnormality part 13 is short and moreover this weld abnormality part 13 is solely generating, it is unnecessary to perform the weld repair. Additionally, even if the inter-abnormality time T2 is shorter than the reference time B, if the time of the range α in which the weld abnormality part 13 and the site 14 continue is shorter than the 2nd set time C, also in this range α it is unnecessary to perform the weld repair. For this reason, it becomes unnecessary to weld-repair the range in which the weld repair may not be performed, so that it is possible to contrive the improvement in welding workability. However, even if the inter-abnormality time T2 is shorter than the reference time B, if the time of the range α in which the weld abnormality part 13 and the site 14 continue exceeds the 2nd set time C, the weld repair is performed with this range α being made the one continuous abnormality section. By this, it is possible to prevent the omission of repair in the minute abnormality continuation generation section in which no repair is necessary from occurring, so that it is possible to achieve the increase in product quality.

Especially, since there is adapted such that, after one bead welding termination, there are extemporaneously judged the repair position, the repair section, the repair conditions and the like to thereby repair-weld, it is possible to greatly reduce the outflow of the weld quality defect to the next process (weld inspection process). That is, even if the weld abnormality part 13 generates, after this one bead welding termination it is possible to perform the repair (re-welding) by the robot (welding robot) 5, the repair work of the weld defect product by the workman becomes unnecessary, and it becomes possible to ensure the stabilized weld quality.

In the above, although there has been explained about the concrete embodiment of this invention, this invention is not limited to the above embodiment, and can be implemented while being variously modified within a scope of this invention. For example, the welding current threshold value and the welding voltage threshold value, which have been used when judging as the weld abnormality part 13, can be arbitrarily set in a range in which that weld abnormality part 13 falls into an allowable range as a product. Further, the set times A and C, the reference time B and the like can be also arbitrarily set in the range in which they fall into the allowable range as the product. The 1st set time A and the 2nd set time C may be the same or different. In a case where they are made different, either may be long. Additionally, in the above embodiment, although a case where the welding current and the welding voltage are outside the set ranges is made the weld abnormality part 13, a case where any one of the welding current and the welding voltage is outside the set range may be made the weld abnormality part 13. Further, in the above embodiment, although the WCR signal has been used for the start signal, there may be used other signal (e. g. , TS signal or the like) other than this WCR signal.

## Claims

1. A welding method **characterized in that**, after a weld start signal has been inputted, a case where at least any one of a welding current and a welding voltage is outside a set range is made a weld abnormality, an abnormality generation time instant and an abnormality termination time instant are calculated with a start signal input timing being made a time axis reference, and an abnormality generation position (11) and an abnormality terminus position (12) are operated from data of the time instants and a robot position information, thereby detecting the weld abnormality.

2. A welding method **characterized in that** a welding current and a welding voltage are detected, a weld abnormality is detected on the basis of the welding current and the welding voltage, and an abnormality generation position (11) is operated from an abnormality generation time instant and an abnormality terminus position (12) is operated from an abnormality termination time instant, thereby performing a weld repair with a range larger than a range of this calculated abnormality generation part (13) being made a repair welding range.

3. A welding method **characterized in that** a welding current and a welding voltage are detected, a weld abnormality is detected on the basis of the welding current and the welding voltage, a degree of an abnormality is judged from data of the welding current and the welding voltage in a section of that abnormality, and weld repair conditions such as torch angle and aiming position are selected in compliance with the degree of the abnormality, thereby performing a weld repair with the weld repair conditions.

4. A welding method **characterized in that** a welding current and a welding voltage are detected, when a weld abnormality time (T1) of a weld abnormality part (13), in which at least any one of the welding current and the welding voltage is outside a set range, is longer than a 1st set time (A), a section of that weld abnormality part (13) is weld-repaired, at a time when there are provided in juxtaposition the weld abnormality part (13) in which the weld abnormality time (T1) is shorter than the 1st set time (A) and a site (14) in which the welding current and the welding voltage are within set ranges, when an inter-abnormality time (T2) of the site (14) within the set ranges is shorter than a reference time (B) and a time (T3) of a range (α) in which the weld abnormality part (13) and the site (14) continue exceeds a 2nd set time (C), a weld repair is performed with this range (α) being made one continuous abnormality section.

5. A welding equipment **characterized by** possessing a welding current/voltage detection means (1) for detecting a welding current and a welding voltage, an abnormality discrimination means (2) for discriminating a case where the welding current and the welding voltage are outside set ranges as a weld abnormality, a time instant calculation means (3) for calculating an abnormality generation time instant and an abnormality termination time instant of a weld abnormality part (13) having been discriminated by the abnormality discrimination means (2) with a start signal input timing being made a time axis reference, a robot position information collection means (7) for collecting torch tip position coordinate values of an arm (6) of a robot (5), and an operation means (8) for operating an abnormality generation position (11) and an abnormality terminus position (12) on the basis of a data of the time instant calculation means (3) and a data of the robot position information collection means (7).
